# EUROPEAN PATENT APPLICATION

(11) **EP 4 826 471 A1**
(43) Date of publication of application: **21.10.2026**
(21) Application number: 25170295.7
(22) Date of filing: 14.04.2025
(51) Int. Cl.: G05B 17/02, G06N 3/0475, G06Q 10/20, G05B 13/02

(54) **METHOD FOR UPDATING INDUSTRIAL ASSET INFORMATION MODELS IN AN INDUSTRIAL PLANT**

(71) Applicant: ABB SCHWEIZ AG, 5400 Baden (CH)
(72) Inventor: SAHLAB, Nada, 68159 Mannheim (DE); GRUENER, Sten, 69514 Laudenbach (DE); MANCA, Gianluca, 80935 München (DE)
(74) Representative: Maiwald GmbH

(57) **Abstract**

A computer-implemented method (100) for updating a hierarchy (3) of asset information models (3a-3c) relating to industrial assets (2) of an industrial plant (1), comprising the steps of:
• determining (110) whether, in a repository (4) of documents (4a-4c) relating to one or more of the industrial assets (2), one or more documents (4a-4c) have been added or changed;
• providing (120), to a generative machine learning model, GMLM (5):
∘ the one or more added or changed documents (4a-4c) or any part thereof; and
∘ context information (3#) relating to the hierarchy (3) of information models (3a-3c);

• determining (130), from the so-obtained output (5a) of the GMLM (5), one or more affected information models (6) for which the one or more added and/or changed documents (4a-4c) are relevant;
• determining (140), based at least in part on the one or more added or changed documents (4a-4c), one or more changes (7) to be made to the at least one affected information model (6); and
• applying (150) the so-determined one or more changes (7) to the at least one affected information model (6).

## Description

### FIELD OF THE INVENTION

The invention relates to the management of "digital twins" of industrial assets in an industrial plant, and in particular to the updating of information models in response to actual changes that happen on-site.

### BACKGROUND

Within the vision of Industry 4.0, physical assets installed in production and process plants are to be equipped with tools to improve their monitoring, maintenance and operation. This is done by using virtual models representing the assets digitally as well as communication methods to retrieve updated information regarding an asset's operation. The digital twin concept stems from this goal. Corresponding technologies, namely the Asset Administration Shell (AAS) are evolving to realize it.

However, with digital twin models, i.e., the digital representation of relevant engineering data of physical assets, comes the challenge of keeping these up-to-date. Whenever the asset itself or its configuration changes, this change needs to be reflected in the digital twin models, so that the digital twin is still a true twin of the asset. To date, this is an onerous and error-prone manual task. As a result, over continued operation of the industrial plant, the digital twin models tend to drift away from their respective originals. This means that any predictions or planned actions obtained based on the digital twin models tend to become less accurate.

### OBJECTIVE OF THE INVENTION

It is therefore an objective of the present invention to facilitate the automated updating of information models that relate to industrial assets in an industrial plant, thereby also reducing errors and mismatches that inevitably accrue during the manual maintenance of the information models.

This objective is achieved by the method according to the main claim. Further advantageous embodiments are detailed in the dependent claims.

### DISCLOSURE OF THE INVENTION

The invention provides a computer-implemented method for updating a hierarchy of asset information models relating to industrial assets of an industrial plant. In particular, an industrial asset may be any structure, device, sensor or module that is configured to participate in the execution of an industrial process in the industrial plant. Examples of industrial assets include sensors that are configured to record one or more measurement quantities from the industrial process, valves, pumps, motors, conveyors, controllers, as well as larger units such as pressurizable tanks or process modules for modular industrial plants that may be assembled like Lego to execute a particular industrial process. Such larger units may include sub-components (i.e., sub-assets), like an inlet valve or an outlet valve. That is, in the context of the present method, industrial assets may be defined on any suitable level of granularity.

An information model may be any collection or compilation of information that is relevant for the integration of the industrial asset into the industrial plant, and/or for the ongoing use of the industrial asset in the execution of the industrial process. In a simple case, the information model may be a record of data that comprises properties, attributes and/or variables together with their corresponding values. But an information model may also comprise sub-models that, for example, relate to sub-components or sub-assets or the industrial asset.

In one particularly advantageous embodiment, at least one information model is a structural model that comprises at least engineering data of a physical industrial asset. In particular, engineering data may be any information that is relevant for the planning of the composition and later use of the industrial plant comprising the industrial asset. For example, this engineering data may comprise capabilities, requirements, inputs/outputs, and/or physical dimensions of the industrial asset. That is, the engineering of the industrial plant may start from a given set of requirements for executing the industrial process and optionally also boundary conditions for the assembly of the industrial plant, such as available space, energy or money.

In the course of the method, it is determined whether, in a repository of documents relating to one or more of the industrial assets, one or more documents have been added or changed. The documents may, for example, comprise manuals, technical datasheets, and/or maintenance records. For example, if an asset is replaced with a new one, this new asset may come with new manuals and datasheets. But new versions of manuals and datasheets may also be released for existing assets that physically stay the same. For example, after the initial start of sales of the industrial asset, pooled experience from the operation of the asset may give rise to new knowledge that goes into an updated version of the manual. For example, the manual may be augmented with troubleshooting information of the kind, "if symptom X appears, try to remedy the problem by performing action Y", or with maintenance information of the kind, "it is recommended to change the gearbox oil every year or every 10,000 operation cycles, whichever occurs first". Also, knowledge may accrue regarding optimal working points of the asset with respect to certain optimization goals.

The one or more changed documents or any part thereof, such as a difference compared with the previous version, is provided to a generative machine learning model, GMLM. For example, the GMLM may be a large language model, LLM, that is configured to take a text prompt as input and repeatedly predict portions of text, and in particular to iteratively predict next words of text sequences. Also, context information relating to the hierarchy of information models is provided to the GMLM. In particular, this context information may comprise which information models are present and how they are interrelated. For example, information models may be interrelated by virtue of the one being a sub-model of the other, or by virtue of the one referring to the other in order to avoid duplication of information.

From the output of the GMLM, one or more affected information models are determined for which the one or more added and/or changed documents are relevant. In particular, that an information model is affected may comprise that the one or more changed documents are likely to comprise information based on which an update in the respective information model may be advantageous or even required. That is, the one or more changed documents comprise information that is related to that in the affected information model.

Based at least in part on the one or more added or changed documents, one or more changes to be made to the at least one affected information model is determined. The so-determined one or more changes are applied to the at least one affected information model.

The determining of the changes to be made may be straight-forward in simple cases. For example, the added or changed document may explicitly mention that a certain parameter in a configuration file is to be changed. But in more complex cases, some reasoning may be required to arrive, given certain information in the added or changed documents, at a place in the information model where an update is needed. For example, if the information model mentions "DelayTime = 500" and textual information in the added or changed document instructs to increase the delay time, some reasoning is needed to arrive at an appropriate amount for the increase, such as "DelayTime = 550". Any suitable technique may be used for reasoning of this kind.

A GMLM is typically trained on a very large quantity of publicly available information. It can be expected that very few, if any, of this training material is from the industrial domain. It is even possible that the concrete domain of the information models in a given industrial plant did not exist at the time of training the GMLM. The inventors have found that, irrespective of the content of the concrete training material that was used, the GMLM has learned generic reasoning capabilities. The present method makes use of these generic reasoning capabilities by guiding them, using the context information, into the domain of the concrete industrial plant. The GMLM is particularly good at determining, based on added or changed documents, affected information models, i.e., information models for which the information in the added or changed documents may be relevant.

The inventors have also found that, in this determination, it is safe if the GMLM, in case it makes an error, errs on the side of flagging one information model too many as an affected information model. A mis-classification of a given information model as affected is not likely to cause information in this information model to be updated in an incorrect manner. It is far more probable that the determining of concrete changes to be made to this "affected" information model will not reveal any concrete changes, so nothing will happen.

In this manner, the information contained in the added or changed documents may be used to a greater extent. That is, it becomes less likely that any item of information in the added or changed document will not be used as an appropriate update to an information model. In particular, the GMLM is very good at determining affected information models from a heterogeneous mixture of differently structured, or even unstructured, documents. For example, later maintenance records have a structure that is complete different from the structure of the originally provided manuals or datasheets.

The update process, and thus the performing of the present method, may be initiated periodically, but also in response to particular events, such as component replacements or modifications to operational parameters. Examples for substantial changes that may trigger an update are the replacement of elements within an asset, e.g., a control valve within a pressurized tank, or the modification of existing elements, e.g., changing the alarm threshold of a high temperature alarm within a reactor. These changes need to be reflected in the digital representation of the physical asset to ensure the fidelity and usability of the digital twin. Previously, these changes were often either not reflected in the stored information model or presented a high manual effort to detect and update, rendering it less reliable and suboptimal to be used by applications. This is especially challenging in the case of many present sub-models and cross-dependencies, which induce changes in other asset information models and present an overall increased update effort.

Prime examples of information models are Asset Administrations Shells, AAS, that are an industry standard for vendor-agnostic structural models.

The presently proposed approach is not a mere "lift-and-shift" automation of an update process that would otherwise be performed by a human. A human would proceed differently, i.e., speed-read the added or changed information and immediately reason in one step which changes need to be performed. Here, the process is deliberately changed to a two-step process, namely first determining affected information models and then examining, in each affected information model, what needs to be changed. Compared with the purely manual process, this increases the amount of work measured in terms of items of information that need to be processed and compared to each other. This is not optimized for human work where these processing and comparison operations are "expensive", but for machine work where processing and comparison operations are "cheap" and there is the added benefit of guardrailing against GMLM "hallucinations". In other words, the present method makes the problem more tractable for machine work, at the price of increasing the overall amount of work. But this is a small price to pay because machine power is abundant (if not infinite).

In particular, as discussed before, using GMLMs first for determining affected information models and then for determining to-be-made changes within these affected information models allows to make use of the strengths of the GMLMs while alleviating the weaknesses. This is particularly true if different compositions of context information, or even differently architectured and/or trained GMLMs, are used in the two steps. That is, the present method comprises a specific adaptation to the strengths and weaknesses of computer processing, and in particular GMLMs, and is therefore distinct from "lift-and-shift" automation of an originally manual process.

In a particularly advantageous embodiment, the determining of the one or more changes to be made comprises correlating detected changes in the added or changed documents to existing elements in at least one affected information model. This correlating may be performed in any suitable manner. For example, semantic matching may be performed between the information in the added or changed documents on the one hand, and items of information in the information models on the other hand. For example, this may involve matching the identified additions and/or changes in the one or more added or changed documents to identifiers and attributes of items of information in an affected information model, or in a sub-model thereof. Relevant parts of the affection model or sub-model, as well as relationship to other information models or sub-models thereof, may be selected for updating.

In another particularly advantageous embodiment, in the course of determining the one or mor changes to be made, the one or more added or changed documents or any part thereof are provided to a generative machine learning model, GMLM. Also, context information relating to at least one particular affected information model is provided to the GMLM. The GMLM that is used in this step may be the same GMLM that was also used when determining one or more affected information models, but this is not required. Rather, for the determining of affected information models on the one hand and for the determining of to-be-made changes, different GMLMs may be deliberately chosen.

One potential reason for doing this is to use, for each of the two tasks, a GMLM that is better suited for the respective task, e.g., by virtue of its particular architecture or training. Another potential reason is to guard against "hallucinations" of GMLMs: In case a query to a GMLM is outside of the domain on which the GMLM was trained, the GMLM tends to produce at least some best-effort answer, rather than refusing entirely to provide an answer. This is somewhat akin to the behaviour of an exam-writing student who, in a pinch, writes at least something on each question or task in order to give the examiners something to mark. But unlike in most exams, in the field of industrial information models, making a wrong update can be worse than making no update. As discussed before, in order for an update to happen, two hurdles must be overcome: First, an information model needs to be flagged as affected, and then a concrete change to this information model needs to be proposed. If two different GMLMs are used for the two different tasks, then a hallucination of a first GMLM that flags a certain information model as "affected" is unlikely to coincide with a hallucination of a second GMLM that will propose an erroneous update for this very "affected" information model.

Optionally, the determined one or more changes to the at least one affected information model may be presented to a human expert for approval before being applied to the at least one affected information model. Merely reviewing these intended changes is a much smaller effort than the previously required human effort of determining all appropriate changes from the added or changed documents. Thus, this effort is a small price to pay for a hedge against erroneous changes that might, for example, result from a "hallucination" of a GMLM.

In a further particularly advantageous embodiment, at least one information model comprises sub-models that represent information from different domains and/or aspects of a physical industrial asset. These sub-models may be maintained independently and updated according to different criteria. In particular, different kinds of knowledge may be directly steered towards the different domains and/or aspects to which they pertain.

In particular, the determining of one more affected information models may comprise determining an affected sub-model of at least one affected information model. That is, the selection of an affected model may be moved to the more granular level of sub-models. In this manner, domains and/or aspects of the information model that are already known to be not affected by particular additions and/or changes to documents in the repository are excluded from being modified. Moreover, it is an easier task to find, given additions or changes in one or more documents, an appropriate update if the target model is more concrete and limited.

In a further particularly advantageous embodiment, at least one item of information is retrieved from the hierarchy of information models. Based at least in part on this item of information, an instruction for changing the physical behaviour of at least one industrial asset is determined. This instruction is communicated to the at least one industrial asset, which in turn causes the physical behaviour of the at least one industrial asset to change. In this manner, the new information from the added or changed documents in the repository is finally put into practice in the use of the industrial plant comprising the industrial asset. In particular, the new information may thereby have an impact on the execution of a physical industrial process in the industrial plant, so as to improve this execution and/or the results of the process.

In a further particularly advantageous embodiment, the added or changed documents are chosen to comprise information relating to:
- a replacement of at least one part in a physical industrial asset; and/or
- a configuration change of the physical industrial asset.

In particular, if at least one new part of the physical industrial asset that takes the place of an old part is not of the same make and model as the old part, it may in some manner behave differently from the old part, which is reflected in the new documentation that comes with it. In another example, if a defective part is reflected with a fresh instance of nominally the same part, the maintenance history with respect to the old instance is no longer valid for the new instance. Rather, this maintenance history is inextricably tied to the old instance.

Configuration changes are usually intended to change the behaviour of the industrial asset. Therefore, if an information model is to completely describe the industrial asset, the changed configuration needs to be reflected somewhere in the information model. In simple cases, there is a 1:1 relationship between the configuration change and an entry in an information model. But in other cases, the relationship may not be so simple. For example, the configuration change may manifest itself in a mechanical action that has been performed on the industrial asset, such as a new tool having been attached to a robot. If work logs as new or changed documents indicate that this has been done, some reasoning is required to derive all changes to information models that emanate from this action. First of all, the robot now has the functionality that the new tool provides, so a complete new information model that relates to the new tool and its new functionality becomes relevant. But there also other implications. The tool also causes the outer dimensions of the robot, as well as its spatial mass distribution, to change. Also, if the tool consumes electricity and/or compressed air, this consumption will have to be reflected in some other information model.

In a further particularly advantageous embodiment, at least one added or changed document is decomposed into multiple units. Each such unit is provided to the GMLM. In this manner, the task of finding affected information models is facilitated because the GMLM can concentrate on finding an affected information model for one particular piece of information. In particular, the maximum length of a query, and/or of context information, that may be presented to the GMLM may be limited. It is not guaranteed that a matching information model will be found for every unit of the added or changed document. Some of the units might not be relevant to the particular plant. For example, a manual may comprise information about many different combinations of a given robot with different tools, but the robot that is in use in the industrial plant may carry only one tool at any given time, which makes only the information about this combination relevant. Also, some of the information in the document may be too generic to be of use for updating an information model, such as standard-issue advice that the asset is not to be operated by children and not to be immersed in water.

Alternatively or in combination to decomposing the added or changed documents into units, the GMLM may be used to create instances of semantically coherent changes in the one or more added changed documents by interpreting the detected differences. In this manner, starting from each detected difference, one or more affected information models may then be found.

In a further particularly advantageous embodiment, additional sources are used, alone or in combination with one another and with the use of the GMLM, to determine one or more affected models.

First, the added of changed document may explicitly mention at least one asset. Then an information model relating to this asset may be determined as affected information model.

Second, information models in which a given item of information referred to in the added or changed document or part thereof appears are more likely to be affected than other information models. In particular, there are many items of information that appear in only a few, or even in only one, of the information models in the hierarchy.

Third, dependencies between multiple information models may be exploited to determine affected information models. In many situations, changing one item in one information model entails further changes in other information models. For example, if one asset is configured to output a measured temperature on a Celsius scale instead of a Kelvin scale, and this temperature is used by another asset, then this other asset may need to be configured to accept a temperature on a Celsius scale.

In a further particularly advantageous embodiment, the one or more affected information models are determined also based at least in part on information that is indicative of a current operating state of an industrial plant. Once the initial engineering of the industrial plant is complete, a major reason for adding or changing documents to the repository is that the running operation of the industrial plant is to be optimized. That is, the operating state is about to change, and the configuration of at least one asset needs to be adapted to this change. Alternatively or in combination to explicitly evaluating information that is indicative of a current operating state, information that is indicative of this current operating state may be provided to the GMLM as a further input.

The information that is indicative of the current operating state may be obtained from any suitable source. In one example, it is obtained from a distributed control system, DCS, of the industrial plant. This is where the operating state is typically set, so the information that characterizes the operating state is present there. Alternatively or in combination to this, the information that is indicative of the current operating state of the industrial plant may be obtained from one or more control functions, and/or one or more simulation models. For example, simulation models may be used to simulate "what if" scenarios of operating states and configurations of the industrial plant.

As discussed above, in a particularly advantageous embodiment, the method may be performed in the following steps:
- The system scans the documentation for changes using a versioning tool to identify modifications since the last update.
- A GMLM creates instances of semantically coherent changes by interpreting the detected differences.
- The GMLM identifies the affected AAS or assets by correlating the changes with existing asset information.
- Optionally, the GMLM may then find the affected AAS sub-models by pinpointing which specific sub-models are impacted.
- The system locates the affected elements within the AAS models and/or sub-models. Optionally, the GMLM model may map semantic relationships to understand how changes in one element may influence others.
- An update proposal is generated using the GMLM. This proposal outlines the suggested modifications to the sub-models based on the detected changes.
- Optionally, an overview may be created for a human expert to review all proposed changes and their underlying reasoning.

The output of this exemplary embodiment comprises updated AAS sub-models, and/or suggestions presented to a human-in-the-loop.

Because it may be fully or at least partially computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for updating a hierarchy of asset information models relating to industrial assets of an industrial plant;
Figure 2: Exemplary application of the method 100 to a situation where there is an abnormality with one of the industrial assets of an industrial plant.

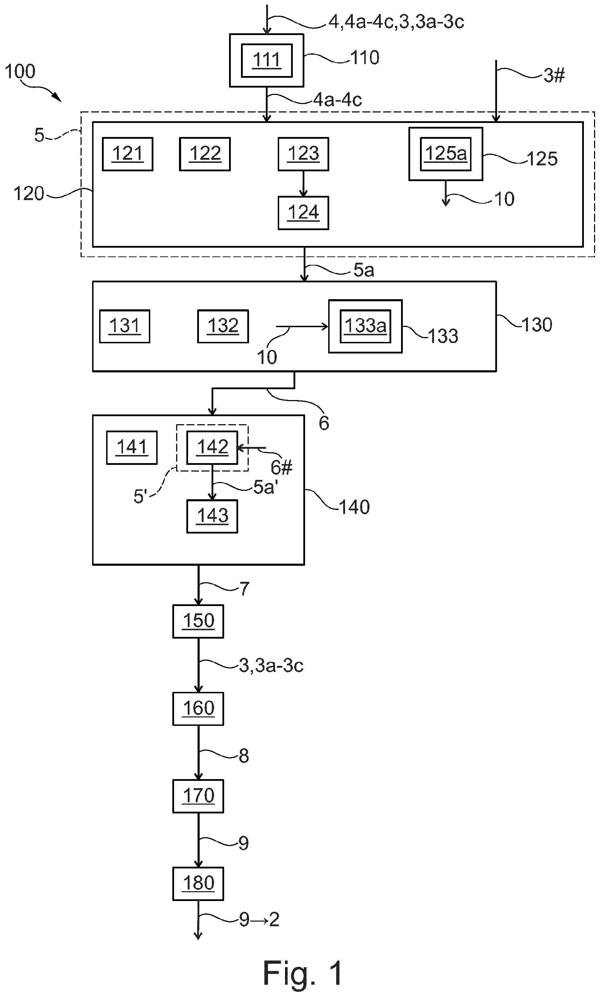

Figure 1 is a schematic flow chart of an embodiment of the method 100 updating a hierarchy 3 of asset information models 3a-3c relating to industrial assets 2 of an industrial plant 1. The method starts from a situation where a given hierarchy 3 of asset information models 3a-3c and a given repository 4 of documents 4a-4c are present.

In step 110, it is determined whether, in a repository 4 of documents 4a-4c relating to one or more of the industrial assets 2, one or more documents 4a-4c have been added or changed.

According to block 111, the added or changed documents 4a-4c may be chosen to comprise information relating to:
- a replacement of at least one part in a physical industrial asset 2; and/or
- a configuration change of the physical industrial asset 2.

In step 120, a generative machine learning model, GMLM 5 is provided with:
- the one or more added or changed documents 4a-4c or any part thereof; and
- context information 3# relating to the hierarchy 3 of information models 3a-3c.

According to block 121, at least one information model 3a-3c may be a structural model that comprises at least engineering data of a physical industrial asset 2.

According to block 122, at least one information model 3a-3c may comprise sub-models that represent information from different domains and/or aspects of a physical industrial asset 2.

According to block 123, at least one added or changed document 4a-4c may be decomposed into multiple units. According to block 124, each such unit may then be provided to the GMLM 5.

According to block 125, information 10 that is indicative of a current operating state of the industrial plant 1 may be provided to the GMLM 5 as a further input.

According to block 125a, the information 10 that is indicative of the current operating state of the industrial plant 1 may be obtained from
- a distributed control system, DCS, of the industrial plant 1; and/or
- one or more control functions; and/or
- one or more simulation models.

In step 130, from the output 5a obtained from the GMLM 5, one or more affected information models 6 are determined for which the one or more added and/or changed documents 4a-4c are relevant.

According to block 131, the determining 130 of one more affected information models 6 may comprise determining an affected sub-model of at least one affected information model 6.

According to block 132, the determining 130 of one or more affected models 6 may be further based on one or more of:
- an explicit mentioning of at least one asset 2 in the added or changed document 4a-4c or part thereof;
- the information models 3a-3c in which a given item of information referred to in the added or changed document 4a-4c or part thereof appears; and
- dependencies between multiple information models 3a-3c.

According to block 133, the one or more affected information models 6 may be determined also based at least in part on information 10 that is indicative of a current operating state of an industrial plant 1.

According to block 133a, the information 10 that is indicative of the current operating state of the industrial plant 1 may be obtained from
- a distributed control system, DCS, of the industrial plant 1; and/or
- one or more control functions; and/or
- one or more simulation models.

In step 140, based at least in part on the one or more added or changed documents 4a-4c, one or more changes 7 to be made to the at least one affected information model 6 are determined.

According to block 141, the determining 140 of the one or more changes 7 to be made may comprise correlating detected changes in the added or changed documents 4a-4c to existing elements in at least one affected information model 6.

According to block 142, a generative machine learning model 5' may be provided with
- the one or more added or changed documents 4a-4c or any part thereof; and
- context information 6# relating to at least one particular affected information model 6
as inputs. This results in an output 5a' of the GMLM 5'. Based at least in part on this output 5a', according to block 143, the one or more changes 7 to be made are determined.

In step 150, the determined to-be-made one or more changes 7 are applied to the at least one affected information model 6.

In the example shown in Figure 1, in step 160, from the hierarchy 3 of information models 3a-3c, at least one item 8 of information is retrieved. In step 170, based at least in part on this item 8 of information, an instruction 9 for changing the physical behaviour of at least one industrial asset 2 is determined. In step 180, this instruction 9 is communicated to the at least one industrial asset 2, so as to cause the physical behaviour of the at least one industrial asset 2 to change.

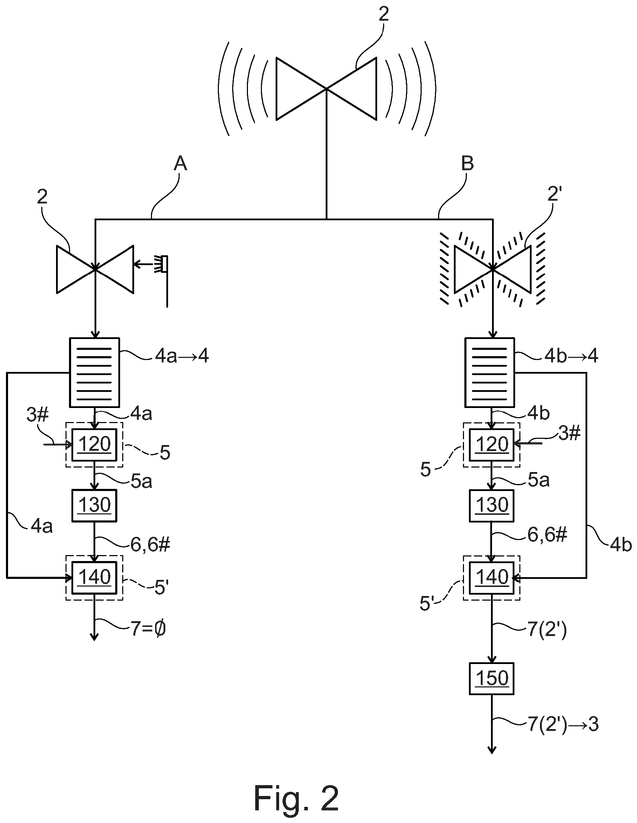

Figure 2 illustrates a scenario in which the method 100 may be applied. In this scenario, a valve in the industrial plant 1 as industrial asset 2 exhibits oscillating abnormalities requiring maintenance. This is symbolized by waves emanating from the The consequences on the repository 3 of information models 3a-3c depends on which option is chosen for remedying the abnormality.

Option A comprises cleaning the valve 2 and leaving exactly this instance of the valve 2 in place. During or after this maintenance, a new maintenance document 4a is created and filed into the repository 4a. When this added maintenance document 4a is examined by the GMLM 5 in step 120 of the method 100, the obtained output 5a of the GMLM 5 will indicate one or more affected information models 6 where modifications could be necessary. Context information 6# relating to these one or more affected information models 6, as well as the new maintenance document 4a, are provided to a second GMLM 5'. But because the valve 2 stays exactly the same except for having been cleaned, the result is that the proposed modifications 7 to the affected information models corresponds to the empty set.

This changes if, according to option B, the valve 2 is replaced with a new instance 2' of nominally the same type. This creates a new maintenance document 4b for the repository 4. When this new maintenance document 4b is examined by the GMLM in step 120 of the method 100, this will again pick the relevant information models 6.

In contrast to option A, when the new maintenance document 4b and context information 6# relating to the affected information models 6 are examined in step 140 by a GMLM 5' (which may the same GMLM 5 as used previously, but is advantageously not), this will create proposals for changes 7(2') to the affected information models 6 that are tailored to the new instance 2' of the asset 2. In step 150, these changes 7(2') are applied to the hierarchy 3 of information models 3a-3c.

If the information model 3a-3c for the valve 2 comprises sub-models, some of these sub-models may be left unchanged because the new instance of the valve 3a-3c is nominally of the same type. At the same, any maintenance history that was associated with the old instance 2 of the valve is no longer relevant for the fresh instance 2'. In particular, sub-models of the information model 3a-3c for the fresh instance 2' may be created from a template that is then filled in at least partially by the GMLM 5'.

### List of reference signs:

- 1: industrial plant
- 2: industrial assets in industrial plant 1
- 2': fresh instance of industrial asset 2
- 3: hierarchy of information models 3a-3c
- 3a-3c: information models
- 4: repository of documents
- 4a-4c: documents in repository 4
- 5: first GMLM for determining affected models 6
- 5': second GMLM for determining proposed changes 7
- 5a: output of first GMLM 5
- 5a': output of second GMLM 5'
- 6: affected information model 3a-3c
- 6#: context information relating to affected information models 6
- 7: proposed changes to affected information models 6
- 8: item of information, retrieved from hierarchy 3
- 9: instruction to change physical behaviour of industrial asset 2
- 10: information indicative of current operating state of industrial plant 1
- 100: method for updating hierarchy 3 of information models 3a-3c
- 110: determining whether documents 4a-4c have been added or changed
- 111: choosing particular documents 4a-4c
- 120: providing documents 4a-4c, context information 3# to first GMLM 5
- 121: choosing structural model as information model 3a-3c
- 122: choosing information model 3a-3c with sub-models
- 123: decomposing document 4a-4c into multiple units
- 124: providing each unit to GMLM 5
- 125: providing operating state information 10 to GMLM 5
- 125a: choosing particular kinds of operating state information 10
- 130: determining affected information models 6 from output 5a
- 131: determining sub-model as affected information model 6
- 132: choosing more information sources for determining affected models 6
- 133: determining affected models 6 based on operating state information 10
- 133a: choosing particular kinds of operating state information 10

- 140: determining to-be-made changes 7 to affected information models 6
- 141: correlating detected changes with elements in information models 3a-3c
- 142: providing documents 4a-4c, context information 6# to second GMLM 5'
- 143: determining changes 7 based on output 5a'
- 150: applying to-be-made changes 7 to affected information models 6
- 160: retrieving item 8 of information from hierarchy 3
- 170: determining instruction 9 for changing physical behaviour
- 180: communicating instruction 9 to industrial asset 2

## Claims

1. A computer-implemented method (100) for updating a hierarchy (3) of asset information models (3a-3c) relating to industrial assets (2) of an industrial plant (1), comprising the steps of:
• determining (110) whether, in a repository (4) of documents (4a-4c) relating to one or more of the industrial assets (2), one or more documents (4a-4c) have been added or changed;
• providing (120), to a generative machine learning model, GMLM (5):
∘ the one or more added or changed documents (4a-4c) or any part thereof; and
∘ context information (3#) relating to the hierarchy (3) of information models (3a-3c);
• determining (130), from the so-obtained output (5a) of the GMLM (5), one or more affected information models (6) for which the one or more added and/or changed documents (4a-4c) are relevant;
• determining (140), based at least in part on the one or more added or changed documents (4a-4c), one or more changes (7) to be made to the at least one affected information model (6); and
• applying (150) the so-determined one or more changes (7) to the at least one affected information model (6).

2. The method (100) of claim 1, wherein the determining (140) of the one or more changes (7) to be made comprises correlating (141) detected changes in the added or changed documents (4a-4c) to existing elements in at least one affected information model (6).

3. The method (100) of any one of claims 1 to 2, wherein the determining (140) of the one or more changes (7) to be made comprises:
• providing (142), to a generative machine learning model, GMLM (5'):
∘ the one or more added or changed documents (4a-4c) or any part thereof; and
∘ context information (6#) relating to at least one particular affected information model (6); and
• determining (143) the one or more changes (7) to be made based at least in part on the so-obtained output (5a') of the GMLM (5').

4. The method (100) of any one of claims 1 to 3, wherein at least one information model (3a-3c) is (121) a structural model that comprises at least engineering data of a physical industrial asset (2).

5. The method (100) of any one of claims 1 to 4, wherein at least one information model (3a-3c) comprises (122) sub-models that represent information from different domains and/or aspects of a physical industrial asset (2).

6. The method (100) of claim 5, wherein the determining (130) of one more affected information models (6) comprises determining (131) an affected sub-model of at least one affected information model (6).

7. The method (100) of any one of claims 1 to 6, further comprising:
• retrieving (160), from the hierarchy (3) of information models (3a-3c), at least one item (8) of information;
• determining (170), based at least in part on this item (8) of information, an instruction (9) for changing the physical behaviour of at least one industrial asset (2); and
• communicating (180) the instruction (9) to the at least one industrial asset (2), so as to cause the physical behaviour of the at least one industrial asset (2) to change.

8. The method (100) of any one of claims 1 to 7, wherein the added or changed documents (4a-4c) are chosen (111) to comprise information relating to:
• a replacement of at least one part in a physical industrial asset (2); and/or
• a configuration change of the physical industrial asset (2).

9. The method (100) of any one of claims 1 to 8, wherein:
• at least one added or changed document (4a-4c) is decomposed (123) into multiple units; and
• each such unit is provided (124) to the GMLM (5).

10. The method (100) of any one of claims 1 to 9, wherein the determining (130) of one or more affected models (6) is further based (132) on one or more of:
• an explicit mentioning of at least one asset (2) in the added or changed document (4a-4c) or part thereof;
• the information models (3a-3c) in which a given item of information referred to in the added or changed document (4a-4c) or part thereof appears; and
• dependencies between multiple information models (3a-3c).

11. The method (100) of any one of claims 1 to 10, wherein the one or more affected information models (6) are determined (133) also based at least in part on information (10) that is indicative of a current operating state of an industrial plant (1), and/or information (10) that is indicative of this current operating state is provided (125) to the GMLM (5) as a further input.

12. The method (100) of claim 11, wherein the information (10) that is indicative of the current operating state of the industrial plant (1) is obtained (125a, 133a) from
• a distributed control system, DCS, of the industrial plant (1); and/or
• one or more control functions; and/or
• one or more simulation models.

13. A computer program, comprising machine-readable instructions that, when executed on one or more computers and/or compute instances, cause the one or more computers and/or compute instances to perform the method (100) of any one of claims 1 to 12.

14. A non-transitory machine-readable data carrier with the computer program of claim 13.

15. One or more computers and/or compute instances with the computer program of claim 13, and/or with the non-transitory machine-readable data carrier and/or computer program of claim 14.
